# EUROPEAN PATENT APPLICATION

(11) **EP 1 920 675 A1**
(43) Date of publication of application: **14.05.2008**
(21) Application number: 07002314.8
(22) Date of filing: 02.02.2007
(51) Int. Cl.: A45D 31/00, B29C 45/16

(54) **Artificial nail, artificial nail set, mold for use in manufacture of artificial nail set, method for manufacturing artificial nail, and method for manufacturing artificial nail set**

(30) Priority: 08.11.2006 KR 20060110035
(71) Applicant: Chang, Sung Yong, Seoul, 135-080 (KR)
(72) Inventor: Chang, Sung Yong, Seoul, 135-080 (KR)
(74) Representative: Winter, Brandl, Fürniss, Hübner Röss, Kaiser, Polte Partnerschaft Patent- und Rechtsanwaltskanzlei

(57) **Abstract**

Disclosed are an artificial nail, an artificial nail set, a mold for manufacturing an artificial nail set, a method of manufacturing an artificial nail, and a method of manufacturing the artificial nail set. The artificial nail (110) comprises two or more stacked layers (112,114), and has a first end (116) to be attached to a user's nail and a second end (118), the first end being thinner than the second end.

## Description

### BACKGROUND OF THE INVENTION

### Field of the Invention

The present invention relates to an artificial nail, an artificial nail set, a mold used for manufacturing an artificial nail set, a method for manufacturing an artificial nail and a method for manufacturing an artificial nail set, and more particularly, to an artificial nail having a first end which is relatively thin and is attached to a fingernail and a second end which is relatively thick and is opposite the first end, an artificial nail set comprising the same artificial nails, a mold used for manufacturing the artificial nail set, a method of manufacturing the artificial nail and a method of manufacturing the artificial nail set.

### Description of the Related Art

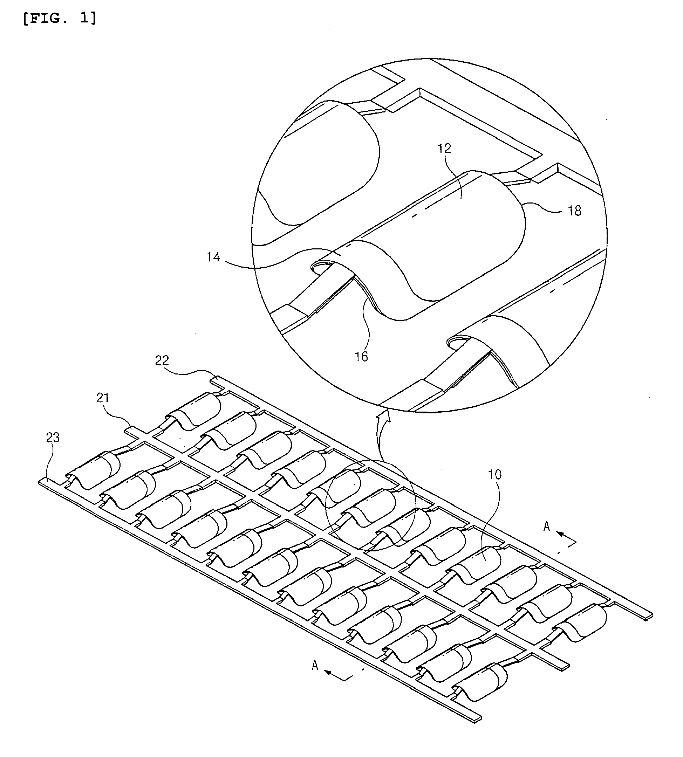

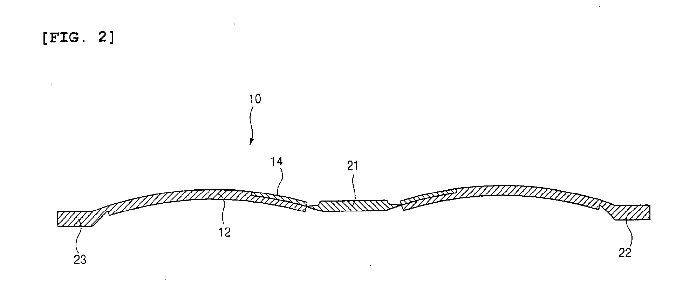

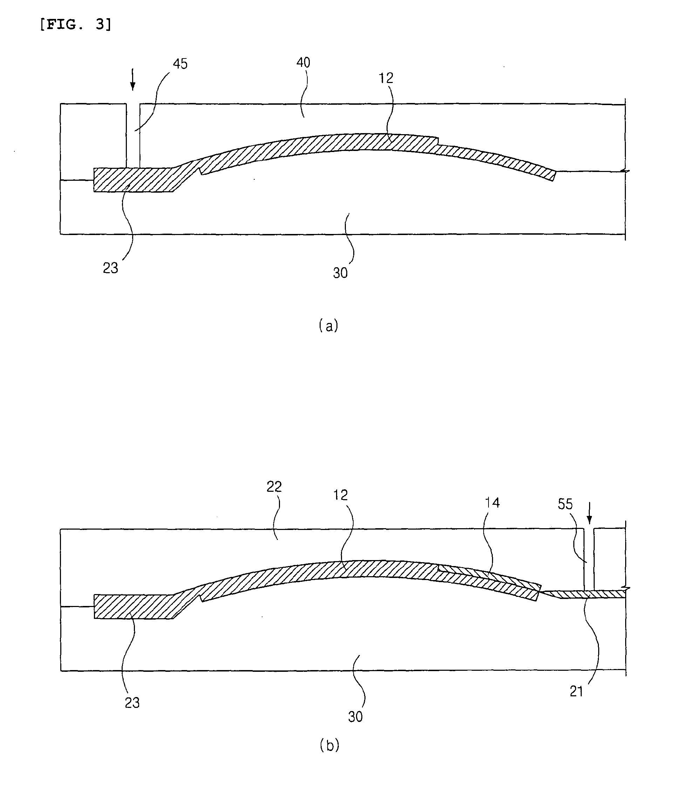

FIG. 1 is a perspective view illustrating a conventional artificial nail manufactured through a double injection molding method, FIG. 2 is a sectional view taken along line A-A shown in FIG. 1, FIG. 3 is a schematic view illustrating a mold for use in the manufacture of the artificial nail shown in FIG. 1 and FIG. 2, and FIG. 4 is a sectional view illustrating the artificial nail shown in FIG. 1, in which the artificial nail is attached to a fingernail.

As shown in FIG. 1 and FIG. 2, an artificial nail 10 comprised of a plurality of stacked layers having different colors and being made of different materials is manufactured through a double injection molding method.

The artificial nail 10 manufactured through a double injection molding method comprises a lower layer 12 and an upper layer 14.

For such a double injection molding method, the mold shown in FIG. 3 is used. The mold comprises a lower mold 30, a first upper mold 40, and a second upper mold 50.

The lower mold 30 and the first upper mold 40 are used to form the lower layer 12 of the artificial nail 10, and the second upper mold 50 is used to form the upper layer 14 on the lower layer 12.

As shown in FIG. 3(a), after the lower layer 12 is prepared using the lower mold 30 and the first upper mold 40, the first upper mold 40 is separated from the lower layer 12, but the lower mold 30 is left attached thereto. Next, as shown in FIG. 3(b), the second upper mold 50 is coupled to the lower mold 30, so that the upper layer 14 can be formed on the lower layer 12.

The first upper mold 40 and the second upper mold 50 have injection holes 45 and 55, respectively, so that raw material such as synthetic resin for the artificial nail 10 can be injected into the space defined by the first upper mold 40 and the second upper mold 50.

As shown in FIG. 3, the injection holes 45 and 55 of the first upper mold 40 and the second upper mold 50 are formed at opposite sides, and thus the lower layer 12 is formed by injecting raw material through the injection hole 45 of the first upper mold 40, and the upper layer 14 is formed by injecting raw material through the injection hole 55 of the second upper mold 50.

At this time, the injected raw material flows to the artificial nails 10 through supports 21, 22, and 23 that connect the artificial nails 10.

As shown in FIG. 1 and FIG. 2, an artificial nail set includes the supports 21, 22, and 23 disposed parallel to each other in three rows, that is, in two side rows 22 and 23 and one middle row 21. Artificial nails 10 are provided between two neighboring supports, for example, two supports 21 and 22, and two supports 21 and 23.

The two side supports 22 and 23 are manufactured from the injected raw material injected through the injection hole 45 of the first upper mold 40 when the lower layers 12 of the artificial nails 10 are manufactured.

The middle supports 21 is manufactured from the injected raw material injected through the injection hole 55 of the second upper mold 50 when the upper layers 14 of the artificial nails 10 are manufactured.

Thus, both first ends 16 of the artificial nails, which are portions to be attached to the cuticle portions of nails, and second ends 18 of the artificial nails, which are opposite the first ends, are coupled to the supports 21, 22 and 23.

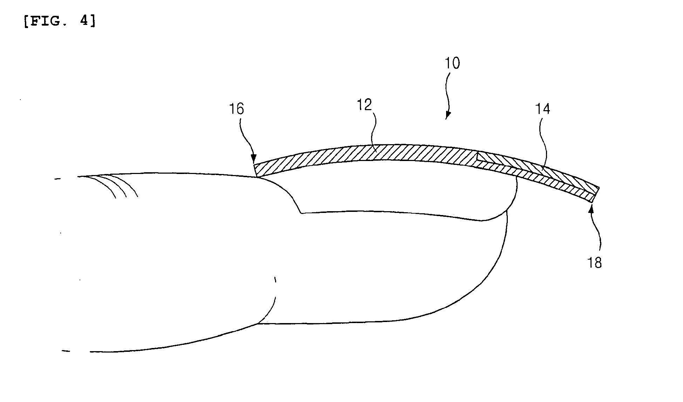

As shown in FIG. 4, the artificial nails 10 manufactured through the above-described method are attached to upper surfaces of nails.

However, the above-described artificial nail 10 of the conventional art has problems in that a large amount of raw material is wasted and the mold has a large size because three supports 21, 22 and 23, provided at respective sides and in a middle portion of an artificial nail set, are needed because the injection hole 45 of the first upper mold 40 and the injection hole 55 of the second upper mold 50 are formed at opposite sides.

If the sizes of the supports 21, 22 and 23 and the mold are increased, a hot runner, emitting heat, must be used in order to facilitate the flow of injected raw material. Thus, the structure of the apparatus for manufacturing an artificial nail and an artificial nail set is complex, and the manufacturing cost is thus high.

Further, as shown in FIG. 3 and FIG. 4, both the first ends 16 and the second ends 18 of the artificial nails 10 are thick because the injection holes 45 and 55 are formed at opposite sides.

That is, a portion near an injection hole in a mold must have a large inner space to promote the smooth flow of raw material and to provide an injection hole. That is, a relatively thick body is formed near the injection hole of the mold. Meanwhile, since the injection holes 45 and 55 of the first upper mold 40 and the second upper mold 50 are formed at opposite sides, both the first ends 16 and the second ends 18 of the artificial nails 10 manufactured using the above-described mold cannot avoid being thick.

Accordingly, because the first end 16 of the artificial nail 10, which is a portion directly attached to the cuticle portion of a nail, is thick, a user cannot feels natural, but feels awkward when the user wears the artificial nail 10.

Furthermore, in the case in which the artificial nail 10 is attached to the upper surface of a nail, which is slightly curved, in a state of being slightly bent, the artificial nail 10 is easily separated from the nail because the elastic restoring force of the artificial nail 10 is high due to the large thickness of the first end 16.

Still further, since the first ends 16 of the artificial nails 10 are connected to the supports 22 and 23, the first ends 16 of the artificial nails 10 are cut away when the artificial nails 10 are used. Accordingly, a user has an unpleasant feeling when wearing the artificial nail 10, because the first end 16 is not trimmed. In order to prevent the user from having the unpleasant feeling, a process of trimming the first end of the artificial nail is required before the artificial nail is used.

Yet further, since the directions of injection are different, internal stress exists between the upper and lower layers, and thus the artificial nail easily breaks.

### SUMMARY OF THE INVENTION

Therefore, the present invention has been made in view of the above problems, and it is an object of the present invention to provide an artificial nail, an artificial nail set, a mold for manufacturing an artificial nail set, a method of manufacturing an artificial nail, and a method of manufacturing an artificial nail set, which are advantageous in that the first end of the artificial nail, which is to be attached to a cuticle portion of a nail, is relatively thin in comparison with the second end of the artificial nail because injection steps for forming all of the layers constituting the artificial nail are performed in the same direction; the mold for use in the manufacture of the artificial nail set has a simple structure; adhesion between the artificial nail and the user's nail is good; and it is possible to prevent the artificial nail from breaking due to internal stress between adjacent layers of the artificial nail.

In accordance with one aspect of the present invention, the above and other objects can be accomplished by the provision of an artificial nail comprising two or more stacked layers, in which a first end of the artificial nail, which is to be attached to a user's nail, is thinner than a second end, which is opposite the first end.

In accordance with another aspect of the present invention, the above and other objects can be accomplished by the provision of an artificial nail set comprising a plurality of artificial nails, each comprising two more stacked layers, and a support connected to the artificial nails, in which a first end of each artificial nail, which is to be attached to a user's nail, is thinner than a second end, each artificial nail comprises a lower layer and an upper layer, and second ends of the upper layer and the lower layer are connected to the support.

In the artificial nail set, an injection step is performed in a manner such that raw material is moved from a middle portion of the support toward respective end portions of the support, and the artificial nails are arranged in a manner such that the largest artificial nail is disposed at the middle portion of the support and the artificial nails become smaller from the middle portion toward respective end portions of the support.

In accordance with another aspect of the present invention, the above and other objects can be accomplished by the provision of a mold for manufacturing an artificial nail set including a plurality of artificial nails, each comprising two or more stacked layers, and a support which connects the artificial nails to each other, comprising a lower mold, a first upper mold for forming a lower layer by being coupled to the lower mold, and a second upper mold for forming an upper layer formed on the upper surface of the lower layer by being coupled to the lower mold, wherein injection holes for both the first upper mold and the second upper mold are provided at second ends of the artificial nails, among first end sides and second end sides, in which first ends of the artificial nails are to be attached to the nails of a user and second ends of the artificial nails are connected to the support, and wherein first inner spaces, defined by the lower mold and the first upper mold and provided to form the first ends of the artificial nails, are smaller than second inner spaces, defined by the lower mold and the first upper mold and provided to form the second ends of the artificial nails.

An air vent may be provided between the lower mold and the first upper mold, so that a passage extending to the first inner spaces can be formed, and air in the first inner spaces can be exhausted therethrough.

The size of the air vent may be preferably larger than that of an air particle and smaller than that of a particle of raw material.

Both injection holes of the first upper mold and the second upper mold may be disposed in the middle portion of the support, the largest artificial nail may be disposed in the middle portion of the support, and the other artificial nails may be sequentially smaller as they are located nearer respective end portions of the support.

In accordance with a further aspect of the present invention, the above and other objects can be accomplished by the provision of a method of manufacturing an artificial nail which includes two or more stacked layers, comprising: forming each layer of the artificial nail through an injection molding method, in which all injection steps are performed in the same direction, and in particular, are performed in a manner such that raw material is supplied to the second end of the artificial nail first and then the a first end of the artificial nail, which is to be attached to the cuticle portion of a user's nail, and thus the first end of the artificial nail is thinner than the second end of the artificial nail.

In accordance with a still further aspect of the present invention, the above and other objects can be accomplished by the provision of a method of manufacturing an artificial nail set in which a plurality of artificial nails is connected to a support and each artificial nail is comprised of two or more stacked layers, comprising forming each layer of each artificial nail through an injection molding method in which all injection steps are performed in the same direction from a second end of the artificial nail to a first end of the artificial nail, which is to be attached to a cuticle portion of a nail, and thus the first end of the artificial nail is thinner than the second end of the artificial nail.

The injection step may be performed in such a manner that raw material may be moved from a middle portion of the support toward respective end portions of the support, and the artificial nails are arranged in a manner such that the largest artificial nail is disposed at the middle portion of the support and the other artificial nails become smaller as they are arranged to be nearer respective end portions of the support.

### BRIEF DESCRIPTION OF THE DRAWINGS

The above and other objects, features and other advantageous effects of the present invention will be more clearly understood from the following detailed description taken in conjunction with the accompanying drawings, in which:
FIG. 1 is a perspective view illustrating a conventional artificial nail manufactured through a double injection molding method;
FIG. 2 is a sectional view taken along line A-A, shown in FIG. 1;
FIG. 3 is a schematic view illustrating a mold for use in the manufacture of the artificial nail shown in FIG. 1 and FIG. 2;
FIG. 4 is a sectional view illustrating the artificial nail shown in FIG. 1, in which the artificial nail is attached to a fingernail;
FIG. 5 is a perspective view illustrating an artificial nail according to one embodiment of the present invention;
FIG. 6 is a sectional view taken along line B-B shown in FIG. 5;
FIG. 7 is a schematic view illustrating a mold for use in the manufacture of the artificial nail according to the embodiment of the present invention; and
FIG. 8 is a sectional view illustrating the artificial nail according to the embodiment of the present invention and a nail, in which the artificial nail is attached to the nail.

### DESCRIPTION OF THE PREFERRED EMBODIMENTS

Hereinafter, embodiments of the present invention will be described with reference to the accompanying drawings.

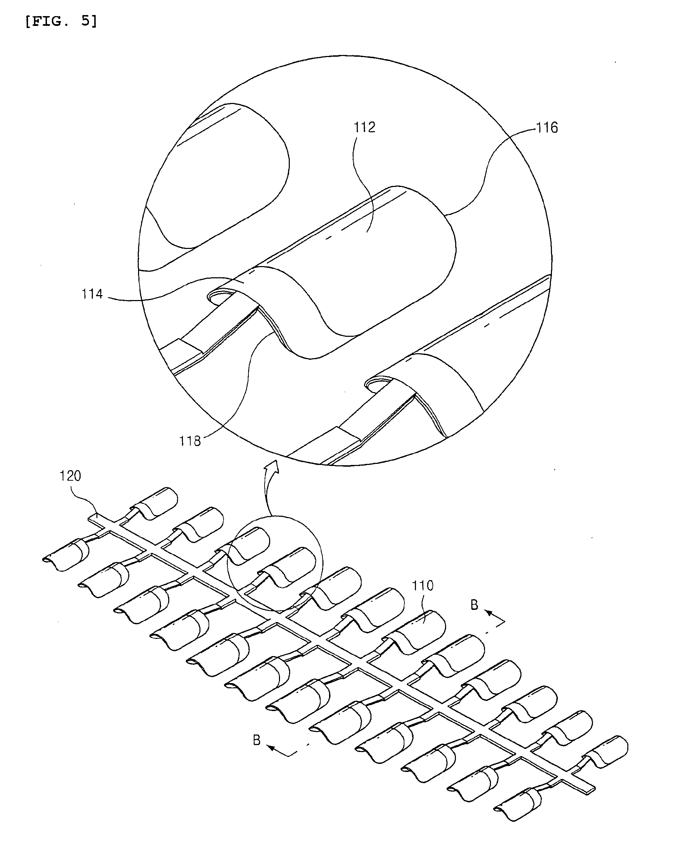

As shown in FIG. 5 through FIG. 8, an artificial nail set according to one embodiment of the present invention comprises artificial nails 110 and a support 120.

Each of the artificial nails 110 comprises two or more stacked layers. In particular, the present embodiment exemplifies the case in which the artificial nail 110 comprises a lower layer 112 and an upper layer 114.

The stacking structure of the lower layer 112 and the upper layer 114 can be made in a manner such that the lower layer 112 is formed with a recess and the upper layer 114 is provided in the recess as shown in FIG. 4, or such that the lower layer 112 does not have a recess and the upper layer 114 is directly disposed on the upper surface of the lower layer 112, as shown in FIG. 5 through FIG. 8.

The artificial nails 110 are connected to each other by the support 120.

In this instance, the first end 116 of the artificial nail, which is the end portion attached to the cuticle portion of a nail, is a free end, and the second end 118 of the artificial nail, which is the end portion corresponding to the end of a nail, is connected to the support 120.

The first end 116 of the artificial nail comprises only the lower layer 112, and the second end 118 comprises the lower layer 112 and the upper layer 114.

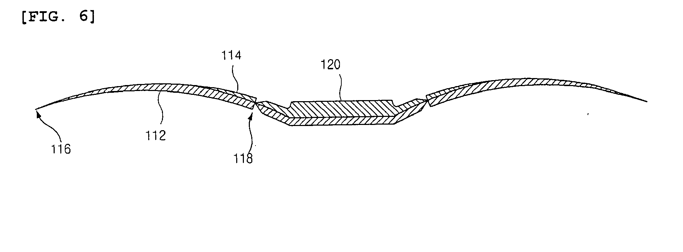

The second end 118, comprising the lower layer 112 and the upper layer 114, is connected to the support 112. In greater detail, as shown in FIG. 6, second ends of the lower layer 112 and the upper layer 114 are respectively connected to the support 120.

Further, the first end 116 of the artificial nail, which is a portion attached to the cuticle portion of a nail, is thinner that the second end 118 of the artificial nail.

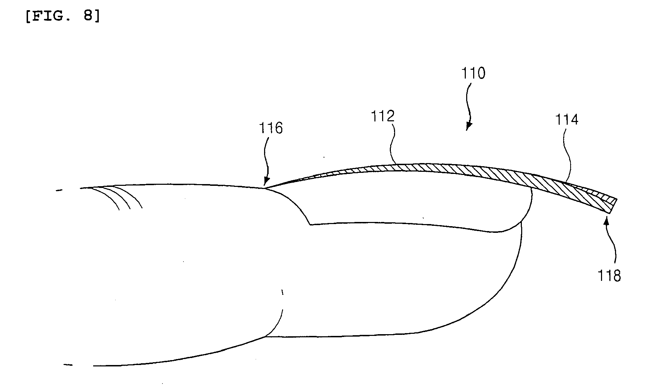

Thanks to this structure, as shown in FIG. 8, when the artificial nail 110 is attached to a nail, a user has a natural feeling instead of an awkward feeling because the first end 116 of the artificial nail is relatively thin. Further, even in the case in which the artificial nail is attached to a nail in the state of being slightly bent, the artificial nail is not easily separated from the nail because the first end 116 of the artificial nail is thin and thus the artificial nail has low elastic resilience.

Still further, the artificial nail set according to the embodiment has a characteristic in which raw material is injected into a middle portion of the support 120 and is then moved toward respective end portions of the support 120. Thus, as shown in FIG. 5, the largest artificial nail 110 is disposed at the middle portion of the support, and the sizes of the artificial nails 110 are sequentially smaller as the locations of the artificial nails 110 are nearer respective end portions of the support.

This is because the spreading speed of the raw material becomes slower due to frictional force as the raw material moves farther away. That is, such a scheme is designed in order to satisfy the requirement that a large amount of the raw material be charged into the artificial nail 110 disposed near the raw material injection hole at high speed, but that a small amount of the raw material be charged into the artificial nail 110 disposed far away from the raw material injection hole at low speed.

For this, the total raw material charging time, that is, the injection time, is decreased, and the defect rate is also decreased because the artificial nails disposed far away from the raw material injection hole require a small amount of the raw material.

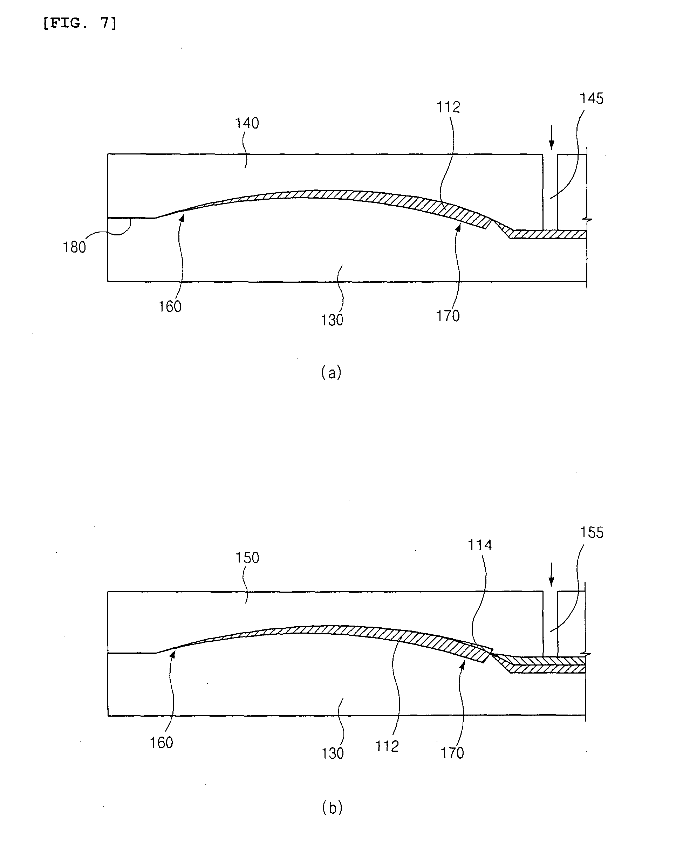

As shown in FIG. 7, a mold for manufacturing the artificial nail set comprises a lower mold 130, a first upper mold 140 and a second upper mold 150.

As shown in FIG. 7(a), the first upper mold 140 is used to form the lower layer 112 of the artificial nail 110 by being coupled to the lower mold 130, and, as shown in FIG. 7(b), the second upper mold 150 is used to form the upper layer 114 by being coupled to the lower mold 130.

That is, the lower layer 112 is formed first by using the lower mold 130 and the first upper mold 140, and then the upper layer 114 is formed by coupling the second upper mold 150 to the lower mold 130.

Accordingly, the second upper mold 150 is required to be size larger than the first upper mold 140, and to be as large as the upper layer 114.

A first injection hole 145 for the first upper mold 140 and a second injection hole 155 for the second upper mold 150 are provided at the second end 118 of the artificial nail. That is, the first and second injection holes 145 and 155 are formed at the location where the support 120 is disposed, and are connected to the second end portion 118 of the artificial nail.

Further, in the case in which the lower mold 130 is coupled to the first upper mold 140, a first inner space 160, defined by the lower mold 130 and the first upper mold 140 and provided to form the first end 116 of the artificial nail, is smaller than a second inner space 170, defined by the lower mold 130 and the first upper mold 140.

Thanks to this structure, the first end 116 of the artificial nail, manufactured using the mold, can be thinner than the second end 118.

The structure in which the first inner space 160 is smaller than the second inner space 170 can be accomplished because the mold does not have the injection hole 145 at the side of the mold, where the first inner space is formed, but the mold has the injection hole 145 at the opposite side of the mold, where the second inner space is formed, and also because the raw material has no problem flowing in the second inner space since the raw material injected through the injection hole 145 reaches the second inner space 170 last.

Since the raw material injected through the second upper mold 150 is formed only on the second end portion of the lower layer 112, it does not contribute to the thickness of the first end 116 of the artificial nail.

Still further, an air vent 180 is provided between the lower mold 130 and the first upper mold 140 in order to vent air, present in the first inner space 160, outside.

The air vent 180 has a size larger than that of an air particle, but smaller than a particle of the raw material injected into the first upper mold 140. Preferably, the air vent 180 is about 0.02 millimeters.

The first injection hole 145 of the first upper mold 140 and the second injection hole 155 of the second upper mold 150 are disposed in the middle portion of the support 120, and the lower mold 130, the first upper mold 140 and the second upper mold 150 have a structure in which the largest artificial nail 110 is disposed closest to the middle portion of the support, and the sizes of the artificial nails are sequentially smaller as their distance from the middle portion of the support becomes longer.

Thanks to the above-described mold structure, the artificial nail set, in which the largest artificial nail 110 is disposed in the middle portion of the support 120 and the sizes of the artificial nails become sequentially smaller as they are located nearer respective end portions of the support, can be manufactured. Thus, the injection time is decreased and the defect rate is also decreased.

Hereinafter, methods of manufacturing the artificial nail 110 and the artificial nail set are described.

First, the lower mold 130 and the first upper mold 140 are coupled, and the raw material is injected into the second end of the first upper mold 140 through the first injection hole 145.

At this time, as shown in FIG. 7(a), since the first inner space 160 is smaller than the second inner space 170, the lower layer 112 of the artificial nail 110, having a first end 116 which is relatively thin and a second end 118 which is relatively thick, is formed between the lower mold 130 and the first upper mold 140.

After separating the first upper mold 140 from the lower mold 130, the second upper mold 150 is coupled to the lower mold 130. Next, the raw material is injected through the second injection hole 155 of the second upper mold 150.

As a result, as shown in FIG. 7(b), the upper layer 114 is formed on the upper surface of the second end of the lower layer 112.

Through the above-described process steps, the artificial nail set shown in FIG. 5 and FIG. 6 is manufactured.

As described above, in the artificial nail set, the first ends 116 of the artificial nails, to be attached to cuticle portions of nails, are free ends, and only the second ends 118, which are opposite the first ends 116, are connected to the support 120.

At this time, the second end of the lower layer 112 and the second end of the upper layer 114 are connected to the support 120.

Since the lower layer 112 and the upper layer 114 are formed by injecting the raw material from the second ends 118 toward the first ends 116, it is possible to form the artificial nail to have a first end 116 that is relatively thin in comparison with the second end 118.

The artificial nail 110 is attached to a nail as shown in FIG. 8.

Since the first end 116 of the artificial nail is thin, a user does not have an awkward feeling, but has a natural feeling when the user wears the artificial nail in a manner such that the first end 116 is attached to the cuticle portion of a nail. Further, since the artificial nail has low elastic resilience, the artificial nail 110 is not easily separated from the nail after it is attached to a nail in a manner such that the first end 116 of the artificial nail 110 is slightly bent.

Further, since the injection direction of the lower layer 112 and the upper layer 114 are the same, there is no stress between the lower layer 112 and the upper layer 114, so the artificial nail 110 does not easily break.

Still further, since it is possible to manufacture a plurality of artificial nails from only one support, the raw material cost is reduced.

Yet further, since the first inner space 160, which is far from the raw material injection hole, is small, it is not required that a large amount of raw material be moved to the first inner space, so a hot runner for improving the flow of raw material is not required, and thus the apparatus for manufacturing the artificial nail and the artificial nail set can have a simple structure, resulting in reduced apparatus installation cost.

As described above, the artificial nail, the artificial nail set, the mold for manufacturing the artificial nail set, the method of manufacturing the artificial nail, and the method of manufacturing the artificial nail set have the following advantageous effects.

First, since the first end of the artificial nail, which is an end portion attached to a cuticle portion of a nail, is thinner than the second end, the artificial nail does not give the user an awkward feeling, but gives a natural feeling when the user wears it, and it is not easily separated from a user's nail once it is attached to the user's nail, even if it is attached in a state of being slightly bent, because it has weak elastic resilience.

The thickness of the first end of the artificial nail is reduced because the raw material injection hole is formed at the second end side of the artificial nail.

Second, since only the second ends of the artificial nails, each artificial nail comprising a plurality of layers, are connected to the support, the first end of the artificial nail, which is the portion attached to a user's nail, is smooth because the first end does not have a cut portion after the artificial nail is detached from the support for use, so a user does not have an unpleasant feeling such that caused when a user's finger is poked by the burr on the cut portion when the user wears the artificial nail on her nail, and an additional trimming step is not required.

Third, since the raw material is supplied from the middle portion of the support, the largest artificial nail is disposed at the middle portion of the support, and the sizes of the artificial nails are sequentially smaller as the artificial nails are located farther from the middle portion of the artificial nail, the total injection time, that is, the total charging time, is reduced and the defect rate is decreased because it is not necessary for a large amount of the raw material to reach the end portions of the support.

Fourth, since the air vent is formed between the lower mold and the first upper mold, only air present in the first inner space is exhausted and the raw material can remain inside the first inner space, thus the defect rate is decreased.

Fifth, since the injection direction when forming the lower layer and the upper layer is the same, the artificial nail is prevented from breaking due to stress between the lower layer and the upper layer.

Further, since it is possible to manufacture a plurality of artificial nails from one support, the raw material cost can be reduced in comparison with the conventional method, in which a plurality of supports is used.

Still further, since the first inner space, which is far from the raw material injection hole, is relatively small, and thus it is not required that a large amount of the raw material flow to the first inner space, a hot runner used for improving the flow of raw material is not needed. For this reason, the apparatus for manufacturing the artificial nail and the artificial nail set is simple, and thus the installation cost thereof is reduced.

Although the decoration for a nail according to the present invention has been described with reference to an embodiment of the present invention, those skilled in the art will appreciate that various modifications, additions and substitutions are possible, without departing from the scope and spirit of the invention as disclosed in the accompanying claims.

## Claims

1. An artificial nail comprising two or more stacked layers, in which a first end of the artificial nail, which is attached to a nail, is thinner than a second end.

2. An artificial nail set comprising:
a plurality of artificial nails, each comprising two or more stacked layers; and
a support connected to the artificial nails,
wherein a first end of each artificial nail, which is attached to a nail, is thinner than a second end of the artificial nail, and each artificial nail comprises a lower layer and an upper layer, and second ends of the upper layer and the lower layer are connected to the support.

3. The artificial nail set according to claim 2, wherein the artificial nail set is manufactured through a manner in which:
injection is conducted in a manner such that raw material is supplied to a middle portion of the support and is then moved toward respective end portions of the support, the largest artificial nail is arranged at the middle portion of the support, and artificial nails become smaller as they become nearer the respective end portions of the support.

4. A mold for manufacturing an artificial nail set, in which a plurality of artificial nails is connected to a support and each artificial nail comprises two or more stacked layers, comprising:
a lower mold;
a first upper mold for forming a lower layer by being coupled to the lower mold; and
a second upper mold for forming an upper layer stacked on an upper surface of the lower layer by being coupled to the lower mold,
wherein both injection holes for the first upper mold and the second upper mold are provided at the second ends of the artificial nails; among first end sides and the second end sides, in which first ends of the artificial nails are attached to nails of a user and second ends of the artificial nails are connected to the support, and
wherein, when the lower mold is combined with the first upper mold, first inner spaces, defined by the lower mold and the first upper mold and provided to form the first ends of the artificial nails, are smaller than second inner spaces, defined by the lower mold and the first upper mold and provided to form the second ends of the artificial nails.

5. The mold according to claim 4, wherein an air vent is provided between the lower mold and the first upper mold so as to communicate with the first inner spaces in order to exhaust air in the first inner spaces outside.

6. The mold according to claim 5, wherein the size of the air vent is larger than that of an air particle but smaller than that of a particle of raw material put into the first upper mold.

7. The mold according to claim 4, wherein the injection hole of the first upper mold and the injection hole of the second upper mold are disposed at a middle portion of the support, and the lower mold, the first upper mold and the second upper mold are structured in a manner such that the largest artificial nail is disposed at the middle portion of the support, and sizes of the artificial nails become sequentially smaller from the middle portion of the support toward respective end portions of the support.

8. A method of manufacturing an artificial nail which comprises two or more stacked layers, comprising: forming each layer of the artificial nail through an injection molding method, wherein each injection molding step is performed in the same direction, and injection is conducted from a second end of the artificial nail, among a first end, to be attached to a cuticle portion of a user's nail, and the second end, so that the first end of the artificial nail is thinner than the second end of the artificial nail.

9. A method of manufacturing an artificial nail set including a plurality of artificial nails, each comprising two or more stacked layers, comprising: forming each layer of each of the artificial nails through an injection molding method, wherein each injection molding step is performed in the same direction, and injection is conducted from a second end of the artificial nail, among a first end, to be attached to a cuticle portion of a user's nail, and the second end, so that the first end of the artificial nail is thinner than the second end of the artificial nail.

10. The method according to claim 9, wherein the injection is performed in a manner such that raw material moves from the middle portion of the support toward respective end portions of the support, and the artificial nails are arranged in a manner such that the largest artificial nail is disposed at the middle portion of the support and the other artificial nails become sequentially smaller from the middle portion toward respective end portions of the support.
